# DEMANDE DE BREVET EUROPEEN

(11) **EP 3 825 915 A1**
(43) Date de publication de la demande: **26.05.2021**
(21) Numéro de dépôt: 20209759.8
(22) Date de dépôt: 25.11.2020
(51) Int. Cl.: G06K 9/62, G06K 9/00

(54) **PROCEDE DE CLASSIFICATION D'UNE EMPREINTE BIOMETRIQUE REPRESENTEE PAR UNE IMAGE D'ENTREE**

(30) Priorité: 25.11.2019 FR 1913172
(71) Demandeur: Idemia Identity & Security France, 92400 Courbevoie (FR)
(72) Inventeur: IATSUN, Iana, 92400 COURBEVOIE (FR); KAZDAGHLI, Laurent, 92400 COURBEVOIE (FR)
(74) Mandataire: Regimbeau

(57) **Abrégé**

Procédé de classification d'une empreinte biométrique représentée par une image d'entrée

La présente invention concerne un procédé de classification d'une empreinte biométrique représentée par une image d'entrée, le procédé étant caractérisé en ce qu'il comprend la mise en œuvre, par des moyens de traitement de données (21) d'un client (2), d'étapes de :
(a) Détermination, pour chacun d'un ensemble prédéfini de motifs généraux possibles d'empreintes biométriques, au moyen au moyen d'un réseau de neurones à convolution, CNN, de si ladite empreinte biométrique présente ou non à ledit motif général.

## Description

### DOMAINE TECHNIQUE GENERAL

La présente invention concerne le domaine de la biométrie, et propose en particulier un procédé de classification d'une empreinte biométrique représentée par une image d'entrée au moyen d'un réseau de neurones à convolution, ainsi qu'un procédé d'apprentissage du réseau de neurones à convolution.

### ETAT DE L'ART

L'authentification/identification biométrique consiste à reconnaitre un individu sur la base de traits biométriques de cet individu tels que les empreintes digitales (reconnaissance digitale), les empreintes palmaires, les empreintes rétiniennes, l'iris ou le visage (reconnaissance faciale).

Les approches biométriques classiques utilisent les informations caractéristiques du trait biométrique extraites à partir de la biométrie acquise, appelées « features », et l'apprentissage/classification est réalisé sur la base de la comparaison de ces caractéristiques.

En particulier, dans le cas de la reconnaissance digitale, les images d'extrémité de doigt sont traitées de sorte à extraire les caractéristiques d'une empreinte qui peuvent être classées en trois catégories :
- Le niveau 1 définit le motif général de cette empreinte (une des quatre ou cinq classes boucle à droite, boucle à gauche, arche, éventuellement arche à arceau, et spirale), et le tracé global des crètes (on obtient en particulier une carte d'orientation dite « Ridge Flow Matrix », carte RFM, qui représente en chaque point de l'empreinte la direction générale de la crête).
- Le niveau 2 définit les points particuliers des empreintes appelés minuties, qui constituent des « événements » le long des crètes (fin d'une crète, bifurcation, etc.). Les approches classiques de reconnaissance utilisent essentiellement ces caractéristiques.
- Le niveau 3 définit des informations plus complexes telles que la forme des crêtes, les pores de la peau, des cicatrices, etc.

On appelle ainsi un « codage » le procédé d'extraction des caractéristiques d'une empreinte (sous la forme de cartes de caractéristiques, ou « feature maps »), lesquelles permettent de composer une signature appelée « template » encodant l'information utile à la phase finale de classification. Plus précisément, on va réaliser la classification par comparaison des cartes de caractéristiques obtenues avec une ou plusieurs carte(s) de caractéristiques de référence associée(s) à des individus connus.

La difficulté principale tient dans le temps de réponse lorsque l'on souhaite faire de l'identification, car il est nécessaire de faire autant de comparaisons qu'il y a d'individus dans la base d'individus connus.

Pour gagner du temps, il a été proposé d'extraire les caractéristiques de niveau 1 (motif général de l'empreinte) par apprentissage profond. Plus précisément, on préclassifie l'empreinte parmi un ensemble de types connus au moyen d'un réseau de neurones, de sorte à limiter le nombre d'individus candidats et donc le nombre de comparaisons à faire.

Le document Ruxin Wang, Congying Han, Yanping Wu, and Tiande Guo ; Fingerprint Classification Based on Depth Neural Network*,* propose ainsi une classification dite « fuzzy » de l'empreinte à partir de sa carte d'orientation, obtenue par pré-traitement.

Cependant, cette méthode s'avère inefficace pour les empreintes abimées et notamment les empreintes dites latentes, par exemple celles trouvées sur une scène de crime. En effet, deux images latentes d'empreintes de la même identité peuvent présenter l'une par rapport à l'autre de fortes rotations, des occultations ainsi qu'un ensemble de distorsions, de sorte qu'obtenir la carte d'orientation est un vrai défi.

Le document Michelsanti, Daniel; Ene, Andreea-Daniela; Guichi, Yanis; Stef, Rares; Nasrollahi, Kamal; Moeslund, Thomas B ; Fast Fingerprint Classification with Deep Neural Networks*,* a démontré qu'il possible d'évaluer le motif général de l'empreinte directement, sans pré-traitement, grâce à un réseau de neurones de type VGG-S. Cette technique permet de se passer de la nécessité d'obtenir les cartes d'orientation, mais ne s'avère en pratique pas meilleure pour les empreintes latentes, les performances n'étant bonnes que pour des empreintes de bonne qualité bien orientées.

Il serait par conséquent souhaitable de disposer d'une solution plus performante de classification d'images d'empreintes biométriques en particulier des empreintes digitales latentes, en vue d'extraction de leurs caractéristiques.

### PRESENTATION DE L'INVENTION

Selon un premier aspect, la présente invention concerne un procédé de classification d'une empreinte biométrique représentée par une image d'entrée, le procédé étant caractérisé en ce qu'il comprend la mise en œuvre, par des moyens de traitement de données d'un client, d'étapes de :
(a) Détermination, pour chacun d'un ensemble prédéfini de motifs généraux possibles d'empreintes biométriques, au moyen au moyen d'un réseau de neurones à convolution, CNN, de si ladite empreinte biométrique présente ou non à ledit motif général.

Selon des caractéristiques avantageuses et non-limitatives :
Ledit CNN présente au moins une connexion résiduelle.
Ledit CNN comprend au moins un bloc dit dense présentant toutes les connexions résiduelles possibles.
Ledit CNN comprend une pluralité de blocs denses, une taille de cartes de caractéristiques des blocs dense étant décroissante en allant de l'entrée vers la sortie du CNN et/ou un nombre de couches par bloc dense étant croissant en allant de l'entrée vers la sortie du CNN.
Une vitesse de décroissance de taille de cartes de caractéristiques des blocs dense est croissante en allant de l'entrée vers la sortie du CNN.
Le procédé comprend une étape (a0) préalable d'apprentissage, par des moyens de traitement de données d'un serveur, à partir d'une base d'images d'empreintes biométriques déjà classifiées, de paramètres dudit CNN.
L'étape (a0) comprend la désactivation aléatoire de couches dudit bloc dense, de préférence avec une probabilité d'environ 10%.
Le procédé comprend une étape (b) de traitement de ladite image d'entrée de sorte à extraire des caractéristiques recherchées de l'empreinte biométrique représentée par ladite image d'entrée.
Lesdites empreintes biométriques sont des empreintes digitales, les caractéristiques recherchées à extraire de l'au moins une empreinte digitale représentée par ladite image d'entrée comprenant la position et/ou l'orientation de minuties.
L'au moins une empreinte biométrique représentée par l'image d'entrée est celle d'un individu, le procédé comprenant en outre une étape (c) d'identification ou d'authentification dudit individu par comparaison des caractéristiques recherchées extraites de l'empreinte biométrique représentée par ladite image d'entrée, avec les caractéristiques d'empreintes biométriques de référence présentant le ou les motifs généraux déterminés à l'étape (a) comme présentés par l'empreinte biométrique représentée par l'image d'entrée.
Lesdites empreintes biométriques sont des empreintes digitales, et ledit ensemble prédéfini de motifs généraux possibles comprend les motifs généraux suivant : boucle à gauche, boucle à droite, arche et spirale.

Selon un deuxième et un troisième aspect, l'invention concerne un produit programme d'ordinateur comprenant des instructions de code pour l'exécution d'un procédé selon le premier aspect de classification d'une empreinte biométrique représentée par une image d'entrée ; et Moyen de stockage lisible par un équipement informatique sur lequel un produit programme d'ordinateur comprend des instructions de code pour l'exécution d'un procédé selon le premier aspect de classification d'une empreinte biométrique représentée par une image d'entrée.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
[Fig 1] La figure 1 est un schéma d'une architecture pour la mise en œuvre du procédé selon l'invention ;
[Fig 2] La figure 2 représente les étapes d'un mode de réalisation préféré du procédé selon l'invention ;
[Fig 3] La figure 3 représente un exemple d'architecture de réseau de neurones à convolution pour la mise en œuvre du procédé selon l'invention.

### DESCRIPTION DETAILLEE

### Principe et architecture

Selon deux aspects complémentaires de l'invention, sont proposés :
- un procédé de classification d'une empreinte biométrique représentée par une image d'entrée, au moyen d'un réseau de neurones à convolution, CNN, et le cas échéant d'extraction de caractéristiques recherchées de l'empreinte biométrique représentée par l'image d'entrée ;
- Un procédé d'apprentissage de paramètres dudit CNN.

Les données d'entrée ou d'apprentissage sont de type image, et sont représentatives d'une empreinte biométrique (en d'autres termes il s'agit d'images de l'empreinte biométrique, i.e. sur lesquelles l'empreinte biométrique est visible), avantageusement choisie parmi une empreinte digitale, une empreinte palmaire, une empreinte rétinienne, etc., et de façon générale toute empreinte pouvant être représentée par une image et associée de manière unique à un individu. De façon préférée ladite empreinte biométrique est une empreinte digitale et on prendra cet exemple dans la suite de la description (comme l'on verra, le présent procédé est tout particulièrement efficace notamment dans le cas des empreintes digitales latentes).

Par classification, on entend la détermination d'au moins un « motif général » de l'empreinte biométrique représentée par l'image d'entrée, i.e. une caractéristique niveau 1 de l'empreinte. On distinguera ici cette classification d'une identification/authentification d'un individu porteur de l'empreinte biométrique (i.e. détermination d'une identité associée à l'empreinte), qui peut être également appelée classification de l'empreinte biométrique.

Le motif général définit la structure globale de l'empreinte et permet de distinguer plusieurs types d'empreintes biométrique.

On suppose à ce titre qu'on dispose d'un ensemble prédéfini de motifs généraux possibles d'empreinte biométrique. Généralement, dans le cas d'empreintes digitales cet ensemble est conforme audit « système Henry » proposé en 1900, et comprend typiquement (préférentiellement uniquement) les motifs généraux suivants :
- Boucle à gauche (« left loop » dans le système Henry) - l'empreinte possède un « core » et un « delta » situé en bas à dauche du core ;
- Boucle à droite (« right loop » dans le système Henry) - l'empreinte possède un core et un delta situé en bas à droite du core ;
- Arche (« arch » dans le système Henry) - l'empreinte possède un delta et éventuellement un core l'un au-dessus de l'autre ;
- Spirale (« whorl » dans le système Henry) - - l'empreinte possède deux cores et deux deltas.

On note que la présente invention ne sera pas limitée à ces quatre motifs généraux, car on trouve parfois d'autres motifs généraux d'empreintes digitales tel que la « double boucle » ou l'« arche arceau ». La spirale peut quant à elle être distinguée en deux motifs selon le sens de rotation. Inversement, les motifs généraux boucle à gauche et boucle à droite sont parfois regroupés sous le motif général « boucle ». L'homme du métier saura adapter le présent procédé à tout ensemble prédéfini de motifs généraux possibles de toute empreinte biométrique.

Le principe à la base du présent procédé est de ne pas considérer la présente classification comme le choix d'un motif général de l'empreinte de l'image d'entrée parmi ledit ensemble prédéfini de motifs généraux possibles d'empreinte biométrique (i.e. une classification multi-classe, en d'autres terme une classification en classes multiples), mais comme la détermination, pour chacun d'un ensemble prédéfini de motifs généraux possibles d'empreinte biométrique, de si ladite empreinte biométrique présente ou non ledit motif (i.e. une multiple classification binaire où chaque classe n'exclut pas une autre, ce que l'on appelle également une classification multi-labels).

Par exemple, au lieu de déterminer si le motif général d'une empreinte digitale est boucle à droite, boucle à gauche, arche ou spirale (i.e. un choix parmi quatre motifs généraux), on détermine si elle est ou du type boucle à droite, si elle est ou non du type boucle à gauche, si elle est ou non du type arche, et si elle est ou non du type spirale.

Il n'est ainsi théoriquement pas impossible qu'une empreinte biométrique soit déterminée comme étant de plusieurs types, i.e. présente à la fois deux motifs généraux, même si dans leur grande majorité les empreintes seront clairement déterminées comme présentant un seul motif général.

Pour n motifs généraux possibles d'empreinte biométriques dans ledit ensemble prédéfini, on a ainsi 2ⁿ-1 combinaisons possibles (comme l'on verra plus loin, il n'est pas possible qu'une empreinte biométrique n'ait aucun motif général), soit par exemple 15 combinaisons pour 4 motifs généraux.

On peut comprendre ce nombre de 2ⁿ-1 combinaisons possibles les n classes initiales (un seul motif général) plus *2ⁿ-n-1* classes « plus complexes » (au moins deux motifs généraux, par exemple double boucle si on a boucle à gauche + bouche à droite).

Le choix d'une telle classification multiple améliore en pratique sensiblement les performances d'une mise en œuvre par CNN. En d'autres termes, le fait de devoir choisir impérativement un motif général (i.e. d'exclure les autres) perturbait les réseaux de neurones, alors que la présente solution n'a plus cette exigence. On observe un gain en particulier sur les empreintes digitales latentes présentant des déformations et des occlusions, pour lesquelles plusieurs motifs généraux peuvent être candidats.

L'éventuelle extraction de caractéristiques qui peut suivre consiste typiquement en un « codage » de l'empreinte représentée par l'image d'entrée, i.e. lesdites caractéristiques recherchées à extraire sont typiquement des caractéristiques « biométriques », c'est-à-dire les caractéristiques « finales » permettant de composer un template de l'empreinte en tant que trait biométrique d'un individu en vue de faire de l'identification/authentification d'individu, voir plus loin. A ce titre, dans le cas d'empreintes digitales lesdites caractéristiques recherchées décrivent typiquement des minuties, c'est-à-dire qu'elles comprennent la position et/ou l'orientation des minuties. Toutefois, on comprendra que le présent procédé n'est pas limité à ce mode de réalisation, et toutes les caractéristiques possiblement d'intérêt en biométrie peuvent être extraites.

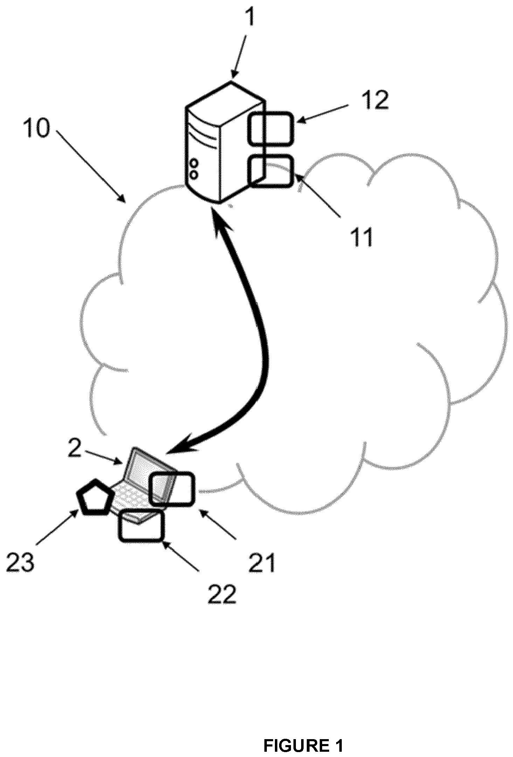

Les présents procédés sont mis en œuvre au sein d'une architecture telle que représentée par la **figure 1****,** grâce à un serveur 1 et un client 2. Le serveur 1 est l'équipement d'apprentissage (mettant en œuvre le procédé d'apprentissage) et le client 2 est un équipement d'utilisation (mettant en œuvre le procédé de classification et le cas échéant d'extraction de caractéristiques), par exemple un terminal d'un utilisateur.

Il est tout à fait possible que les deux équipements 1, 2 soient confondus, mais de façon préférée le serveur 1 est celui d'un fournisseur de solution de sécurité, et le client 2 un équipement grand public, notamment un scanner d'empreintes biométriques, mais également un smartphone, un ordinateur personnel, etc. L'équipement client 2 comprend avantageusement des moyens d'acquisition optiques 23, de sorte à pouvoir directement acquérir ladite image d'entrée, typiquement pour la traiter en direct, alternativement on chargera l'image d'entrée sur l'équipement client 2 (par exemple, des empreintes digitales latentes peuvent être prises en photo sur une scène de crime par une équipe de police scientifique, et ces photos ensuite chargée sur un équipement client 2 dédié de retour dans les locaux de la police scientifique).

Dans tous les cas, chaque équipement 1, 2 est typiquement un équipement informatique distant relié à un réseau étendu 10 tel que le réseau internet pour l'échange des données. Chacun comprend des moyens de traitement de données 11, 21 de type processeur, et des moyens de stockage de données 12, 22 telle qu'une mémoire informatique, par exemple une mémoire flash ou un disque dur. Le serveur 1 stocke une base de données d'apprentissage, i.e. un ensemble d'images d'empreintes biométriques déjà classifiées (i.e. pour lesquelles on sait déjà, pour chacun dudit ensemble prédéfini de motifs généraux possibles d'empreinte biométriques, si l'empreinte présente ou non ce motif général) par opposition aux images dites d'entrée que l'on cherche justement à traiter.

### Procédé

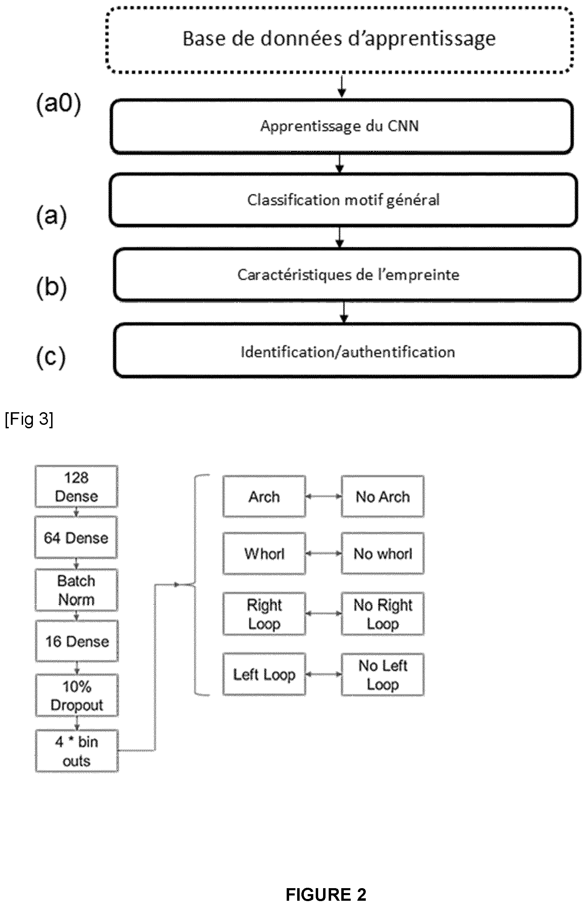

En résumé, en référence à la **figure 2****,** le présent procédé de classification d'une empreinte biométrique représentée par une image d'entrée comprend essentiellement une étape (a) de détermination, pour chacun d'un ensemble prédéfini de motifs généraux possibles d'empreinte biométrique, au moyen au moyen d'un réseau de neurones à convolution, CNN, de si ladite empreinte biométrique présente ou non à ledit motif général. En d'autres termes, on obtient autant de booléens que de motifs généraux possibles d'empreinte biométrique dans ledit ensemble prédéfini (valeur appelée *n* précédemment). A ce titre la sortie du CNN est typiquement un vecteur de dimension *n* ou *2n* (si on a également pour chaque motif un score représentatif de la probabilité que l'empreinte présente ce motif).

Dans une éventuelle étape (b), ladite image d'entrée est avantageusement traitée de sorte à extraire des caractéristiques recherchées de l'empreinte biométrique représentée par ladite image d'entrée.

Comme l'on verra ensuite, le procédé peut comprendre en outre une étape (c) d'identification ou d'authentification d'au moins un individu par comparaison des caractéristiques recherchées extraites de l'empreinte biométrique représentée par ladite image d'entrée, avec les caractéristiques d'empreintes biométriques de référence présentant le ou les motifs généraux déterminés à l'étape (a) comme présentés par l'empreinte biométrique représentée par l'image d'entrée : on comprend qu'il s'agit d'un sous-groupe de l'ensemble d'empreintes biométriques de référence, limitant de fait le nombre de comparaisons à faire.

### CNN

Ledit CNN peut être de nombreux types, et notamment être un CNN conventionnel (succession directe de couches de convolution *CONV,* couches de normalisation en batch *BN,* et couches non-linéaires *NL*)*.*

Selon un mode de réalisation préféré, ledit CNN est de type réseau résiduel. On constate que de tels réseaux résiduels sont très efficaces pour de la pure classification binaire (détermination si oui ou non un motif général est présenté), et bien plus légers que de nombreux CNN de traitement d'image tels que les CNN de détection.

Un réseau résiduel, ou RESNET, est un CNN présentant au moins une « connexion résiduelle » (en anglais « skip connection » ou simplement « short-cut »), c'est-à-dire une connexion de qui vient « court-circuiter » au moins une couche, par analogie à ce qu'on constate dans les neurones pyramidaux du cerveau.

En effet, lorsque l'on complexifie un modèle en lui rajoutant des couches, il arrive que certaines de ces couches impactent négativement les performances du modèle. Les connexions résiduelles garantissent que à défaut d'apprendre une transformation utile une couche doit au pire apprendre l'identité, cela évite de dégrader les performances des autres couches. Le principe de fonctionnement à la base des réseaux résiduels est d'additionner point par point l'entrée et la sortie d'une couche de convolution, cela permet de propager le signal des couches moins profondes vers les couches les plus profondes. Ce réseau apporte comme expliqué d'excellents résultats en particulier en classification pure.

De façon classique dans un tel ResNet pour la mise en œuvre du présent procédé on a par exemple dans un bloc une branche principale (court-circuité par la connexion résiduelle) avec une pluralité de couches de convolutions potentiellement suivies d'une couche non-linéaire (par exemple ReLU) et/ou une couche de normalisation en batch. La sortie de cette branche est typiquement ajoutée point par point avec l'image d'entrée (du fait de la connexion résiduelle), et passe par une dernière couche de réduction de dimensionnalité (typiquement *AveragePool* ou *MaxPool*)*.*

Une couche entièrement connectée permet la génération du vecteur de sortie (i.e. le résultat de la classification), et chaque sortie binaire peut comprendre sa fonction d'activation notamment de type *Softmax,* voir plus loin.

De façon préférée, en référence à la **figure 3****,** le CNN est même de type réseau « densément connecté » (ou juste réseau dense, ou DENSENET) ; c'est-à-dire que non seulement il présente au moins une connexion résiduelle, mais dans au moins un bloc dit dense comprenant toutes les connexions résiduelles possibles, c'est à dire chaque connexion résiduelle reliant une entrée d'une première couche du bloc à une sortie d'une deuxième couche du bloc en aval de la première couche. Comme on verra plus loin, la notion de couche doit ici être comprise comme limitée aux couches de convolution (i.e. on ne court-circuite pas les couches non linéaires ou les couches de normalisation en batch) voire « unité de convolution » dans la mesure où on peut notamment ajouter des couches de convolution 1x1 avant les couches « actives » de convolution (généralement 3x3) juste pour réduire le nombre de cartes de caractéristiques (feature maps) en entrée.

En d'autres termes, pour un bloc dense à k couches, on a :
- *k* connexion résiduelles court-circuitant respectivement la 1^{ere}, la 2^{eme}, ... la *k-ième* couche ;
- *k-1* connexions résiduelles court-circuitant respectivement la 1^{ere} et la 2^{eme} couche, la 2^{eme} et la 3^{eme} couche, ... la *k-1-ième* couche et la *k-ième* couche ;
- *k-2* connexions résiduelles court-circuitant respectivement de la 1^{ere} à la 3^{eme} couche, de la 2^{eme} et la 4^{eme} couche, ... de la *k-2-ième* couche à la *k-ième* couche ;
- 1 connexion résiduelle court-circuitant respectivement la 1^{ere} et la 2^{eme} couche, la 2^{eme} et la 3^{eme} couche, ... la *k-1-ième* couche et la *k-ième* couche.

On comprend que le nombre de connexion résiduelles d'un bloc dense à k couches est donc *Σ^{k}i*, soit *k(k-1)*/*2,* outre les *k* connexions « normales » (d'une couche à la suivante), pour un total de *k(k+1)*/*2* connexions (directes ou résiduelles).

On comprend qu'un bloc dense à taille constante, i.e. la taille des cartes de caractéristiques en entrée est identique à la taille des cartes de caractéristiques en sortie, du fait d'une absent de couches de pooling (réduction de dimensionnalité) dans un bloc dense.

Avantageusement, et comme dans le cas de cet exemple, la taille de cartes de caractéristiques des blocs dense est décroissante en allant de l'entrée vers la sortie du CNN et/ou le nombre de couches par bloc dense est croissant en allant de l'entrée vers la sortie du CNN.

Dans l'exemple de la figure 3, on a trois blocs denses, un premier bloc dense avec une taille de cartes de caractéristiques de 128x128, un deuxième bloc dense avec une taille de cartes de caractéristiques de 64x64, et un troisième bloc dense avec une taille de cartes de caractéristiques de 16x16. Des « couches de transition » peuvent être disposées entre deux blocs denses pour justement permettre la réduction de taille des cartes de caractéristiques entre deux blocs (généralement comprenant une couche de pooling et/ou une couche de normalisation en batch). Comme expliqué on pourra utiliser en tant que « couche » au sens d'unité élémentaire d'un bloc dense des ensembles un peu plus complexes telle qu'une succession d'une couche de convolution 1x1 et une couche de convolution 3x3 (éventuellement chacune suivi d'une couche non-linéaire telle que ReLU et/ou une couche de normalisation en batch), généralement de 6 à 48 telles « unités » élémentaires de couches.

De préférence on « décime », c'est-à-dire que le CNN présente une réduction très rapide de taille de carte de caractéristiques (mathématiquement, une vitesse de décroissance de taille de cartes de caractéristiques des blocs dense est croissante en allant de l'entrée vers la sortie du CNN, notamment division par deux entre le premier et le deuxième bloc dense, puis par quatre entre le deuxième et le troisième bloc dense) et donc une perte associée en précision, car la détermination de motif général nécessite seulement que le CNN « s'intéresse » à des détails et pas à toute l'image (typiquement des points singuliers de type core et delta). Une telle réduction de plus en plus rapide de taille de cartes de caractéristiques permet en prime de limiter l'empreinte mémoire du CNN et donc de faciliter son embarquement sur des dispositifs client 2 simples.

En outre, de manière connue on peut désactiver aléatoirement certaines couches lors de l'apprentissage (voir plus loin), on parle de « dropout » (avec une probabilité donnée généralement de 0% à 50%, et 10% dans l'exemple de la figure 3). Si une couche est désactivée, les couches voisines deviennent directement connectées. En effet on constate que de nombreuses couches n'ont qu'une contribution très minime au résultat, et donc qu'elles peuvent être désactivées sans aucun préjudice, mais le nombre total de paramètre est réduit, et donc à nouveau l'empreinte mémoire du CNN.

### Apprentissage

Avantageusement, le procédé commence par une étape (a0) d'apprentissage, par les moyens de traitement de données 11 du serveur 1, à partir d'une base d'images d'empreintes biométriques déjà classifiées (i.e. pour lesquelles on sait pour chaque motif général dudit ensemble prédéfini de motifs généraux possibles, s'il est présenté), de paramètres dudit CNN.

Cet apprentissage peut être réalisé de façon classique. La fonction de coût d'apprentissage peut être composée d'une attache aux données classique - erreur quadratique moyenne - et d'une régularisation par variation totale.

Comme expliqué, l'étape (a0) d'apprentissage peut comprendre la désactivation aléatoire de couches conformément à un taux de dropout (probabilité qu'une couche soit désactivée) prédéterminé (par exemple 10%)

A noter qu'on dispose généralement d'empreintes de référence associées à un motif général supposé comme étant LE motif général présenté par cette empreinte de référence. Il suffit d'interpréter cela comme signifiant que chaque autre motif général dudit ensemble prédéfini de motifs généraux possibles n'est pas présenté par cette empreinte de référence. Il reste par ailleurs possible de trouver de rares empreintes de références qui pourrait le cas échéant présenter plusieurs motifs généraux.

De façon classique, on peut dans tous les cas partir d'une base d'empreintes de bonne qualité et des algorithmes d'augmentations peuvent être mis en œuvre de sorte à démultiplier la taille de la base d'apprentissage et fabriquer artificiellement des empreintes latentes (par exemple en déformant les empreintes de bonne qualité, en créer des occlusions, etc.), pour assurer la robustesse du CNN à des défauts d'acquisition usuels.

Le CNN appris peut être stocké le cas échéant sur des moyens de stockage de données 22 du client 2 pour utilisation en classification. A noter que le même CNN peut être embarqué sur de nombreux clients 2, un seul apprentissage est nécessaire.

### Identification/authentification

Comme expliqué, dans une étape (b), ladite image d'entrée peut être traitée de sorte à extraire lesdites caractéristiques recherchées de l'empreinte biométrique représentée par ladite image d'entrée, lesquelles peuvent notamment comprendre la position et/ou l'orientation de minuties dans le cas d'empreintes digitales.

De façon préférée, le procédé comprend en outre une étape (c) d'identification ou d'authentification d'au moins un individu par comparaison des caractéristiques recherchées extraites de l'empreinte biométrique représentée par ladite image d'entrée, avec les caractéristiques d'empreintes biométrique de référence, qui pourra être mise en œuvre de n'importe quelle façon connue de l'homme du métier. Par exemple, le client 2 peut stocke les caractéristiques des empreintes d'un ou plusieurs personnes inscrites dans un fichier de police comme empreintes de référence, de sorte à pouvoir identifier la personne ayant laissé une empreinte latente : si les caractéristiques extraites correspondent à celles attendues d'un individu connu, l'identité de celui-ci est transmise aux forces de police. Alternativement, le client 2 peut envoyer les caractéristiques extraites à une base de données distante desdites caractéristiques d'empreintes biométriques de référence, pour identification de l'individu.

Comme expliqué, la présente classification permet de ne comparer à l'étape (c) les caractéristiques recherchées extraites de l'empreinte biométrique représentée par ladite image d'entrée, qu'avec les caractéristiques d'empreintes biométriques de référence présentant le ou les motifs généraux déterminés à l'étape (a) comme présentés par l'empreinte biométrique représentée par l'image d'entrée, d'où un gain de temps. A noter qu'on peut prévoir que si le résultat de la comparaison n'est pas concluant (i.e. aucune empreinte de référence correspondante n'est trouvée), d'effectuer quand même la comparaison des caractéristiques recherchées extraites de l'empreinte biométrique représentée par ladite image d'entrée, avec les autres caractéristiques d'empreintes biométriques de référence, au cas où la classification de l'étape (a) serait erronée.

A noter que les étapes (b) et/ou (c) peuvent être mises en œuvre comme une étape de deuxième classification d'une empreinte biométrique, par exemple via un ou plusieurs CNN dédiés, et le cas échéant comprendre des traitements d'amélioration des empreintes isolées, voir notamment la demande FR 1860323.

### Résultats

Un test sur une base de 100 empreintes latentes avec le CNN conforme à la figure 3 montre une classification correcte dans 98.86% des cas, avec en pratique une réduction de 31% du nombre d'empreintes de référence à tester pour identification/authentification.

### Produit programme d'ordinateur

Selon un deuxième et un troisième aspects, l'invention concerne un produit programme d'ordinateur comprenant des instructions de code pour l'exécution (en particulier sur les moyens de traitement de données 11, 21 du serveur 1 et/ou du client 2) d'un procédé de classification d'une empreinte biométrique représentée par une image d'entrée, ainsi que des moyens de stockage lisibles par un équipement informatique (une mémoire 12, 22 du serveur 1 et/ou du client 2) sur lequel on trouve ce produit programme d'ordinateur.

## Revendications

1. Procédé de classification d'une empreinte biométrique représentée par une image d'entrée, le procédé étant **caractérisé en ce qu'**il comprend la mise en œuvre, par des moyens de traitement de données (21) d'un client (2), d'étapes de :
(a) Détermination, pour chacun d'un ensemble prédéfini de motifs généraux possibles d'empreintes biométriques, au moyen au moyen d'un réseau de neurones à convolution, CNN, de si ladite empreinte biométrique présente ou non à ledit motif général.

2. Procédé selon la revendication 1, dans lequel ledit CNN présente au moins une connexion résiduelle.

3. Procédé selon la revendication 2, dans lequel ledit CNN comprend au moins un bloc dit dense présentant toutes les connexions résiduelles possibles.

4. Procédé selon la revendication 3, dans lequel ledit CNN comprend une pluralité de blocs denses, une taille de cartes de caractéristiques des blocs dense étant décroissante en allant de l'entrée vers la sortie du CNN et/ou un nombre de couches par bloc dense étant croissant en allant de l'entrée vers la sortie du CNN.

5. Procédé selon la revendication 4, dans lequel une vitesse de décroissance de taille de cartes de caractéristiques des blocs dense est croissante en allant de l'entrée vers la sortie du CNN.

6. Procédé selon l'une des revendications 1 à 5, comprenant une étape (a0) préalable d'apprentissage, par des moyens de traitement de données (11) d'un serveur (1), à partir d'une base d'images d'empreintes biométriques déjà classifiées, de paramètres dudit CNN.

7. Procédé selon la revendication 6 en combinaison avec l'une des revendications 3 à 5, dans lequel l'étape (a0) comprend la désactivation aléatoire de couches dudit bloc dense, de préférence avec une probabilité d'environ 10%.

8. Procédé selon l'une des revendications 1 à 7, comprenant une étape (b) de traitement de ladite image d'entrée de sorte à extraire des caractéristiques recherchées de l'empreinte biométrique représentée par ladite image d'entrée.

9. Procédé selon la revendication 8, dans lequel lesdites empreintes biométriques sont des empreintes digitales, les caractéristiques recherchées à extraire de l'au moins une empreinte digitale représentée par ladite image d'entrée comprenant la position et/ou l'orientation de minuties.

10. Procédé selon l'une des revendications 8 et 9, dans lequel l'au moins une empreinte biométrique représentée par l'image d'entrée est celle d'un individu, le procédé comprenant en outre une étape (c) d'identification ou d'authentification dudit individu par comparaison des caractéristiques recherchées extraites de l'empreinte biométrique représentée par ladite image d'entrée, avec les caractéristiques d'empreintes biométriques de référence présentant le ou les motifs généraux déterminés à l'étape (a) comme présentés par l'empreinte biométrique représentée par l'image d'entrée.

11. Procédé selon l'une des revendications 1 à 10, dans lequel lesdites empreintes biométriques sont des empreintes digitales, et ledit ensemble prédéfini de motifs généraux possibles comprend les motifs généraux suivant : boucle à gauche, boucle à droite, arche et spirale.

12. Produit programme d'ordinateur comprenant des instructions de code pour l'exécution d'un procédé selon l'une des revendications 1 à 11 de classification d'une empreinte biométrique représentée par une image d'entrée, lorsque ledit programme est exécuté sur un ordinateur.

13. Moyen de stockage lisible par un équipement informatique sur lequel un produit programme d'ordinateur comprend des instructions de code pour l'exécution d'un procédé selon l'une des revendications 1 à 11 de classification d'une empreinte biométrique représentée par une image d'entrée.
